# EUROPÄISCHE PATENTSCHRIFT

(11) **EP 1 669 653 B1**
(45) Veröffentlichungstag und Bekanntmachung des Hinweises auf die Patenterteilung: **20.06.2007**
(21) Anmeldenummer: 05111584.8
(22) Anmeldetag: 01.12.2005
(51) Int. Cl.: F16L 23/00, F16L 58/18

(54) **Spritzschutz**
Guard belt against projections
Collier anti-projections

(30) Priorität: 09.12.2004 DE 102004059528
(43) Veröffentlichungstag der Anmeldung: 14.06.2006
(73) Patentinhaber: Behrens, Bruno, 60528 Frankfurt/Main (DE); Behrens, Horst, 60318 Frankfurt/Main (DE); Behrens, Sonja, 60528 Frankfurt/Main (DE)
(72) Erfinder: Behrens, Bruno, 60528 Frankfurt/Main (DE)
(74) Vertreter: Patentanwälte Freischem

(56) Entgegenhaltungen:
- EP-A- 1 217 704
- DE-U1- 9 104 952
- DE-U1- 29 810 930
- US-A- 4 216 980
- US-A- 4 403 794

## Beschreibung

### Technisches Gebiet

Die Erfindung betrifft einen Spritzschutz für eine Rohrverbindung, mit einem flexiblen Gurt und einem Klettverschluß, mit dem ein erstes Ende des Gurts an einem Gurtabschnitt befestigbar ist, wobei der Klettverschluß ein Teil mit Haken und ein Teil mit Schlaufen aufweist.

### Stand der Technik

Rohrverbindungen, insbesondere Rohrverbindungen chemischer Produktionsanlagen, bestehen in der Regel aus zwei Rohrflanschen, die an den Enden zweier Rohrabschnitte angebracht sind. Die zwei Rohrflansche erstrecken sich radial zur Rohrachse und weisen korrespondierende Durchgangslöcher auf. Zwischen den Flanschen ist in der Regel eine Dichtung angeordnet. Verbindungsschrauben durchragen die Durchgangslöcher in den Flanschen und sind mit Schraubmuttern verschraubt. Durch das Anziehen der Verbindungsverschraubungen werden die Flansche gegeneinander gezogen, so daß die dazwischen liegende Dichtung eingepreßt wird und abdichtet.

Im Falle des Bruchs oder der Zerstörung einer Dichtung besteht die Gefahr, daß ein unter Druck stehendes Fluid innerhalb der Rohrleitung durch den Spalt zwischen den zwei Flanschen hindurch nach außen strömen kann. Insbesondere, wenn das Fluid aggressiv, zum Beispiel ätzend, ist oder wenn das Fluid eine erhöhte Temperatur aufweist, ergibt sich hierdurch eine Gefährdung des Personals in der Nähe der Rohrverbindung.

Aus diesem Grund wird an Rohrverbindungen, durch die kritisches Fluid transportiert wird oder die sich in einem von Personen besuchten Bereich befinden, ein Spritzschutz angebracht. Ein derartiger Spritzschutz besteht aus einer Rohrschelle aus einem Blech oder Kunststoff, welche mit einem Schraubverbinder um den äußeren Umfang der zwei Flansche herum befestigt wird und dadurch den Spalt zwischen den Flanschen abdeckt.

Obwohl sich der bekannte Spritzschutz aus einer Blechschelle oder Kunststoffschelle im praktischen Einsatz bewährt hat, erfordert seine Befestigung und seine Entfernung einen gewissen Arbeitsaufwand.

Ein Spritzschutz der oben beschriebenen Art ist beispielsweise bekannt aus dem deutschen Gebrauchsmuster 298 10 930 U1. Hier werden die beiden Seiten des Spritzschutzes von den zwei Teilen eines Klettverschlusses gebildet, nämlich einerseits einem Textilstreifen mit kleinen Kunststoffhäkchen und andererseits einem Textilstreifen mit einem Flor von Schlaufen.

Dieser Spritzschutz ist besonders günstig in der Herstellung und einfach zu handhaben. Er muß lediglich für einen begrenzten Zeitraum sicherstellen, daß im Falle eines Dichtungsbruchs das Fluid nicht explosionsartig radial aus der Flanschverbindung der Rohrabschnitte austritt. Ein vollständiges Vermeiden des Austretens eines Fluids im Falle des Dichtungsbruchs ist unmöglich, da ein Spritzschutz nicht dicht an der Flanschverbindung angebracht wird. Der Spritzschutz soll den Strahl lediglich in Richtung der Rohrleitung umlenken und den Druck reduzieren. Es kann zur Erzielung eines leicht zu handhabenden Spritzschutzes ein einfaches Gurtmaterial, insbesondere ein aus synthetischen Garnen gefertigtes Textilband, eingesetzt werden. Ein derartiges Gurtmaterial ist hochflexibel, leicht und einfach zu handhaben. Es ist ferner kostengünstig und platzsparend zu lagern. Durch die Befestigung des einen Gurtendes an einem Gurtabschnitt, der in der Regel im mittleren Bereich des Gurtes liegt, kann der gurtartige Spritzschutz an den Rohrflanschen angebracht werden, wobei er die Flanschverbindung der Rohrabschnitte vollständig umgreift.

Nach dem Anbringen des Spritzschutzes ist allerdings der freie Blick auf die Flanschverbindung versperrt. Es ist folglich nicht mehr möglich, durch eine Sichtkontrolle festzustellen, ob kleinere Undichtigkeiten zu Leckagen an der Flanschverbindung führen.

Die Druckschrift DE 91 04 952 U1 offenbart einen Spritzschutz, der hier Flanschenschutz genannt wird. Dieser Spritzschutz ist aus einem optisch transparentem Material gefertigt und ist auf seiner dem Flansch zugewandten Seite mit einem für den Inhaltsstoff der Rohrleitung geeignet gewählten Reagenz beschichtet. Bei einem leckagebedingten Austreten des Rohrleitungs-inhalts soll dieser mit dem Indikator reagieren.

US 4216980 offenbart einen Spritzschutz aus weißem lichtdurchlässigem Material.

### Offenbarung der Erfindung

Aufgabe der Erfindung ist es, einen Spritzschutz zu schaffen, der eine Sichtkontrolle der Flanschverbindung ermöglicht und besonders einfach zu Handhaben und kostengünstig Herzustellen ist.

Diese Aufgabe wird erfindungsgemäß dadurch gelöst, daß das Teil mit Haken auf der Außenseite des Gurtes und das Teil mit Schlaufen auf der Innenseite des Gurtes angeordnet ist, die Innenseite des Gurtes eine helle und vorzugsweise weiße Farbe aufweist und die Außenseite des Gurtes aus einem lichtdurchlässigen Material besteht.

Das lichtdurchlässige Material ermöglicht es, Helligkeitsänderungen oder Farbänderungen des unter der Außenseite liegenden Materials der Innenseite des Gurtes optisch zu erfassen. Derartige Helligkeitsänderungen oder Farbänderungen treten regelmäßig bei einer Befeuchtung des Materials der Innenseite infolge einer Leckage und eines Flüssigkeitsaustritts im Bereich der Flanschverbindung auf. Um diesen Effekt zu erzielen, werden gemäß der Erfindung die verschiedenen Teile des Klettverschlusses verwendet. Das mit Schlaufen versehene flauschige Teil des Klettverschlusses ist hell, vorzugsweise weiß gefärbt. Aufgrund seiner flauschigen, vorzugsweise textilen Struktur saugt er sich mit ggf. austretender Flüssigkeit voll und ändert hierdurch die Farbe, das heißt er wird dunkler. Dies ist sofort durch die transparente Außenseite hindurch zu sehen. Dabei wird bei einer geringen Leckage die austretende Flüssigkeit in diesem Flausch-Teil zurückgehalten, so daß sie nicht auf den Boden tropft. Das Hakenteil des Klettverschlusses bildet die transparente Außenseite des Gurtes. Beim Umwickeln des Flansches mit dem Gurt um mehr als 360° werden die Schlaufen auf der Innenseite des Gurtes gegen die Haken auf dessen Außenseite gedrückt, und der Klettverschluß wird so an dem Flansch befestigt.

Durch den Spritzschutz mit lichtdurchlässiger, vorzugsweise transparenter Außenseite und einer Innenseite, die vorzugsweise aus textilem Material besteht und eine helle oder weiße Farbe aufweist, wird die Möglichkeit der optischen Erfassung sogar gegenüber einer Flanschverbindung ohne Spritzschutz verbessert. Wenn aus der Flanschverbindung ohne Spritzschutz nur geringe Flüssigkeitsmengen austreten, bilden diese nur einen dünnen Film kleiner Tröpfchen an der Unterseite des Flansches oder verdampfen, ohne optisch wahrgenommen zu werden. Durch den Spritzschutz werden austretende Flüssigkeiten auch in kleinen Mengen an der Innenseite des Spritzschutzes gebunden und befeuchten das Material der Innenseite, welches hierdurch seine Farbe ändert und vorzugsweise dunkler wird. Diese Farbänderung ist durch das lichtdurchlässige oder durchsichtige Material der Außenseite des Gurtes hindurch sichtbar. Der Spritzschutz ermöglicht somit das Erkennen einer ersten Beschädigung der Dichtung, bevor es zum tatsächlichen Bruch der Dichtung kommt.

Das mit Schlaufen versehene Flauschteil des Klettverschlusses kann zusätzlich ein Reagenz aufweisen. Diese optischen Erfassung der Leckage funktioniert aber insbesondere auch ohne Reagenz und bei Flüssigkeiten, die nicht reagieren, wie z.B. destilliertes Wasser oder einige Flüssigkeiten der Lebensmittel verarbeitenden Industrie.

Vorzugsweise besteht die Innenseite des Gurtes aus einem textilen Material, insbesondere aus synthetischen Garnen, das eine gute Aufnahme der Flüssigkeit bei gleichzeitiger Farbänderung gewährleistet. Die Außenseite kann in der Praxis aus einem dünnen Kunststoffstreifen bestehen, der kontinuierlich geformt, insbesondere extrudiert oder spritzgegossen ist.

Der Gurt sollte etwas breiter sein als die durch ihn abgedeckte Flanschverbindung. Dadurch ragt ein Randstreifen zu beiden Seiten über die Ränder der Flanschverbindung. Diese Randstreifen erhöhen die durch den Spritzschutz bewirkte Hemmung gegen Austreten des Fluids quer zur Rohrleitungsrichtung.

Bei einer praktischen Ausführungsform ist zusätzlich an dem zweiten Gurt-ende ein Haltemittel angeordnet, welches mit einem Teil der Rohrverbindung verbindbar ist. Dieses Haltemittel vereinfacht das Anbringen des Gurtes an den Verbindungsflanschen. Das Haltemittel kann mindestens einen Haken und vorzugsweise zwei im Abstand zueinander angeordnete Haken aufweisen, welche mit den Enden einer Verbindungsverschraubung der Rohrverbindung verhakbar sind. Zum Anbringen des Spritzschutzes werden die beiden Haken an den Enden der Verschraubung befestigt. Anschließend wird der Gurt mit einer gewissen Zugkraft um die Verbindungsflansche herumgeführt, so daß er den Spalt zwischen den Verbindungsflanschen vollständig abdeckt. Das erste Ende des Gurtes überlappt dabei das zweite Ende des Gurtes möglichst über eine bestimmte Länge.

Durch den Klettverschluß wird das erste Ende des Gurtes mit einem anderem Gurtabschnitt verbunden, so daß der Gurt, mit einer gewissen Vorspannung die Verbindungsflansche und den dazwischen liegenden Spalt umgebend, fixiert ist.

Das Schlaufenteil des Klettverschlusses weist einen Flor von Schlaufen aus synthetischen Fäden auf. Dieser Flor, der gegen die äußere Randfläche der Verbindungsflansche anliegt, hält im Falle des Dichtungsbruchs das durch den Spalt zwischen den Flanschen austretende Fluid zurück. Die Teile des Klettverschlusses erstrecken sich vorzugsweise über die gesamte Länge des Gurtes. Wenigstens ein Teil des Klettverschlusses kann sich aber auch nur über einen Teil der Länge des Gurtes erstrecken. Es ist allerdings darauf zu achten, daß eine ausreichende Länge des Klettverschlusses wirksam im Eingriff ist, um ein Öffnen des Spritzschutzes selbst beim Übersteigen des Nenndrucks innerhalb der Rohrleitung zuverlässig zu vermeiden.

Den Endabschnitt des Gurtendes mit dem genannten Klettverschlußteil kann eine Grifflasche bilden, welche nicht an dem darunter liegenden Gurtabschnitt haftet, so daß das Ergreifen des Gurtendes zum Lösen der Befestigung vereinfacht ist.

### Kurze Beschreibung der Zeichnungen

Eine praktische Ausführungsform der Erfindung wird nachfolgend unter Bezugnahme auf die beigefügten Zeichnungen beschrieben.

Dabei zeigen:
- Fig. 1: einen erfindungsgemäßen Spritzschutz in schaubildlicher Darstellung,
- Fig. 2: eine Flanschverbindung zwischen zwei Rohrleitungen mit erfindungsgemäßem Spritzschutz und
- Fig. 3: einen Abschnitt eines Gurtes, der den erfindungsgemäßen Spritzschutz bildet.

### Ausführungsform(en) der Erfindung

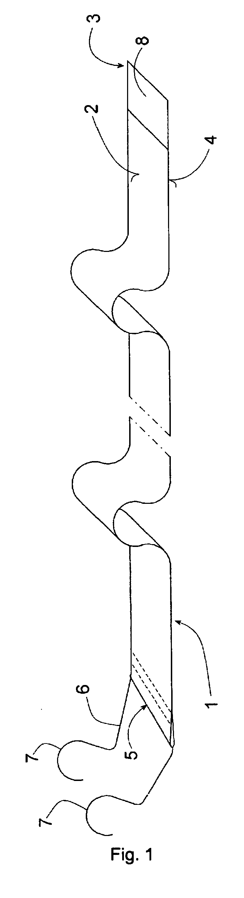

Die Figur 1 zeigt den einfachen Aufbau eines erfindungsgemäßen Spritzschutzes. Er besteht im wesentlichen aus einem einige Zentimeter breiten Gurt 1 aus flexiblem Material. Der Gurt 1 besteht vorzugsweise aus einem inneren Gewebeband aus synthetischen Garnen und einer Außenseite, bestehend aus einem transparenten oder transluzenten Kunststoffstreifen.

Auf seiner in Figur 1 sichtbaren Außenseite 2 ist der Gurt 1 zumindest im mittleren Bereich mit einem Teil eines Klettverschlusses versehen. Ein Klettverschluß ist eine Verschlußvorrichtung, bestehend aus zwei flexiblen textilen Flächengebilden, von denen eines mit einem Flor kurzer Kunststoffhäkchen und das andere mit einem Flor von Schlaufen aus Kunststoffäden versehen ist. Klettverschlüsse werden häufig unter der Marke VELCRO® vertrieben. Heutzutage werden die Häkchen-Teile des Klettverschlusses in Form von Kunststoffstreifen gefertigt, die aus transparentem oder transluzentem Material bestehen. Das andere Teil des Klettverschlusses mit dem Schlaufenflor ist an der nicht in Figur 1 sichtbaren unteren Seite oder Innenseite 4 des Gurtes 1 angebracht. Es besteht, wie erwähnt, aus einem Textilband mit dem Flor und einer hellen, vorzugsweise weißen Farbe. Diese Innenseite liegt an dem äußeren Umfang der Flanschverbindung an, wenn der Spritzschutz um den Flansch herum angebracht ist. Falls eine Leckage zum Austritt einer Flüssigkeit aus der Flanschverbindung führt, befeuchtet die Flüssigkeit dieses Textil auf der Innenseite des Spritzschutzes. Hierdurch ändert sich die Farbe des Textils, was durch die lichtdurchlässige Außenseite des Spritzschutzes hindurch sichtbar ist. Die Dichtung der entsprechenden Flanschverbindung kann somit erneuert werden, bevor es zu einen Dichtungsbruch kommt.

Am zweiten Ende 5 ist ein Abschnitt des Gurtes 1 umgenäht, so daß eine Schlaufe gebildet wird, in der ein Drahtbügel 6 aus Stahl gehalten ist, der zwei im Abstand zueinander befindliche Haken 7 bildet.

Der äußerste Endbereich des ersten Endes 3 des Gurtes 1 bildet eine Griff-lasche 8.

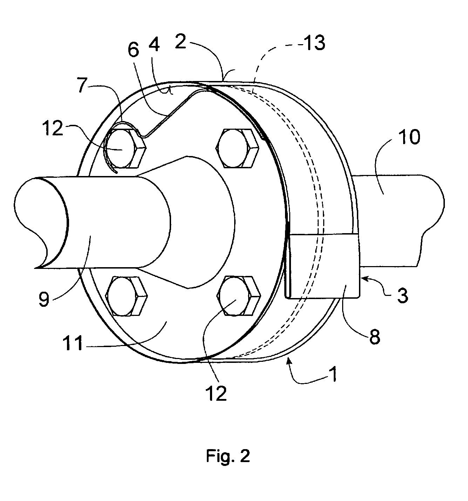

Die Verwendung des Spritzschutzes aus Figur 1 ist in Figur 2 erkennbar. Figur 2 zeigt zwei Rohrabschnitte 9, 10, welche Rohrflansche 11 aufweisen, die über Verbindungsverschraubungen 12 miteinander verschraubt sind. Zwischen den Rohrflanschen 11 verläuft ein Spalt 13, in dem eine Dichtung (nicht dargestellt) aufgenommen ist.

Der Spritzschutz aus Figur 1 ist um den Umfang der Rohrflansche 11 gewickelt, so daß er den Spalt 13 abdeckt. Hierzu verhaken die beiden Haken 7 mit den Enden der Verbindungsverschraubung 12, das heißt mit dem Schraubenkopf und der Schraubenmutter auf beiden Seiten der Flanschverbindung. Der Gurt 1 wird mit seiner Innenseite 4 gegen den Umfang der beiden Flansche 11 gelegt, so daß sich der Spalt 13 etwa in der Mitte des Gurtes befindet. Der Gurt 1 wird mit gewisser Vorspannung um die Rohrflansche 11 herumgespannt, bis das erste Ende 3 des Gurtes 1 gegen einen mittleren Gurtabschnitt anliegt. In diesem Moment verhaken sich die Häkchen am ersten Teil des Klettverschlusses auf der Außenseite mit den Schlaufen des zweiten Teils des Klettverschlusses auf der Innenseite. Der Spritzschutz wird sicher am Umfang der Flanschverbindung gehalten und vermeidet im Falle eines Dichtungsbruchs das explosionsartige Austreten von Fluid durch den Spalt 13 zwischen den beiden Rohrflanschen 11, zumal - wie oben beschrieben - sich anbahnende Dichtungsschäden im Idealfall vor dem Bruch der Dichtung gesehen werden können.

Das Teil des Klettverschlusses an der Innenseite 4 des Spritzschutzes weist, wie erwähnt, den Schlaufenflor des Klettverschlusses auf, der mit Vorspannkraft gegen die radial außen liegende Randfläche der Rohrflansche 11 anliegt. Der Schlaufenflor bildet ein Labyrinth für im Falle des Dichtungsbruchs aus dem Spalt 13 zwischen den Rohrflanschen 11 austretendes Fluid und hemmt so dessen schnelles Ausströmen.

Der Gurt 1 des Spritzschutzes ist vorzugsweise etwas breiter als die radiale Außenfläche der Flanschverbindung, so daß er zu beiden Seiten über diese Außenfläche übersteht. Auch hierdurch wird ein Ausspritzen von Flüssigkeit aus der Rohrleitung beim Dichtungsbruch gehemmt.

Wie in Figur 2 erkennbar, liegt die Grifflasche 8, welche nicht mit einem Teil des Klettverschlusses versehen ist, lose auf dem benachbarten Gurtabschnitt auf oder ragt etwas von diesem weg, so daß sie leicht von Hand ergriffen werden kann. Zum Entfernen des Spritzschutzes wird einfach an der Grifflasche 8 gezogen, so daß sich die beiden Teile des Klettverschlusses voneinander lösen.

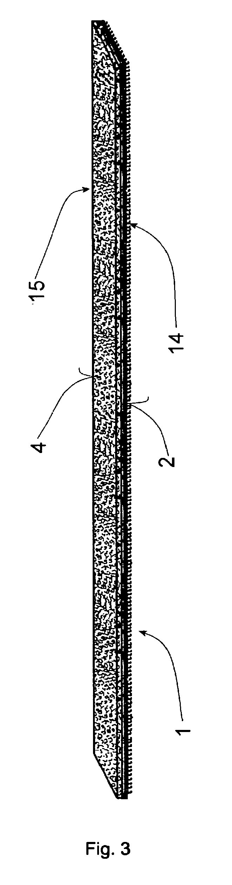

In der Figur 3 ist der Gurt 1 zur Bildung des erfindungsgemäßen Spritzschutzes genauer dargestellt. Er besteht aus zwei fest miteinander verbundenen, insbesondere miteinander verklebten Schichten. Die erste Schicht weist die Häkchen 14 auf und bildet die Außenseite 2 des Spritzschutzes. Sie besteht aus einem durchsichtigen folienartigen Kunststoff, z.B. Polypropylen oder Polyethylen und ist z. B. im Extrusionsverfahren hergestellt. Auf die den Häkchen 14 gegenüberliegende Fläche ist ein weißes Textilband aufgeklebt, dessen freie Oberfläche den Schlaufenflor 15 trägt und die Innenseite des Spritzschutzes bildet, der gegen die ringförmige Randfläche der Rohrflansche 11 anliegt. Falls Flüssigkeit durch die Dichtung der Flanschverbindung nach außen tritt, wird diese in dem Textilband aufgenommen. Dieses wird feucht und ändert dabei seine Farbe. Die Farbänderung ist durch die durchsichtige Außenseite 2 des Spritzschutzes hindurch sichtbar.

Bezugszeichenliste:
- 1: Gurt
- 2: Außenseite
- 3: erstes Ende
- 4: Innenseite
- 5: zweites Ende
- 6: Drahtbügel
- 7: Haken
- 8: Grifflasche
- 9: Rohrabschnitt
- 10: Rohrabschnitt
- 11: Rohrflansch
- 12: Verbindungsverschraubung
- 13: Spalt
- 14: Häckchen
- 15: Schlaufenflor

## Patentansprüche

1. Spritzschutz für eine Rohrverbindung, mit einem flexiblen Gurt (1) und einem Klettverschluß, mit dem ein erstes Ende (3) des Gurts (1) an einem Gurtabschnitt befestigbar ist, wobei der Klettverschluß ein Teil mit Haken und ein Teil mit Schlaufen aufweist,
**dadurch gekennzeichnet, daß** der Teil mit Haken auf der Außenseite (2) des Gurtes (1) und der Teil mit Schlaufen auf der Innenseite (4) des Gurtes (1) angeordnet ist, die Innenseite (4) des Gurtes hell, vorzugsweise weiß gefärbt ist und die Außenseite (2) des Gurtes (1) aus einem lichtdurchlässigen Material besteht.

2. Spritzschutz nach Anspruch 1, **dadurch gekennzeichnet, daß** die Außenseite (2) des Gurtes aus transparentem Material besteht.

3. Spritzschutz nach einem der vorangehenden Ansprüche, **dadurch gekennzeichnet, daß** die Schlaufen an der Innenseite (4) des Gurtes angeordnet sind, die schlaufenfreie Fläche des Teils mit Schlaufen gegen die hakenfreie Fläche des Teils mit Haken anliegt und die Haken an der Außenseite (2) des Gurts angeordnet sind.

4. Spritzschutz nach einem der vorangehenden Ansprüche, **dadurch gekennzeichnet, daß** die Innenseite (4) des Gurtes (1) aus textilem Material besteht.

5. Spritzschutz nach einem der vorangehenden Ansprüche, **dadurch gekennzeichnet, daß** die Außenseite (2) des Gurtes aus einem dünnen Kunststoffstreifen besteht.

6. Spritzschutz nach einem der vorangehenden Ansprüche, **dadurch gekennzeichnet, daß** die Breite des Gurtes (1) größer ist als die radial außen liegende Fläche der Rohrverbindung.

7. Spritzschutz einem der vorangehenden Ansprüche, **dadurch gekennzeichnet, daß** an dem zweiten Ende (5) des Gurts (1) ein Haltemittel angeordnet ist, welches mit einem Teil der Rohrverbindung verbindbar ist.

8. Spritzschutz nach Anspruch 7, **dadurch gekennzeichnet, daß** das Haltemittel mindestens einen Haken (7) aufweist.

9. Spritzschutz nach Anspruch 8, **dadurch gekennzeichnet, daß** das Haltemittel zwei im Abstand zueinander angeordnete Haken (7) aufweist, welche mit den Enden einer Verbindungsverschraubung (12) der Rohrverbindung verhakbar sind.

10. Spritzschutz nach einem der vorangehenden Ansprüche, **dadurch gekennzeichnet, daß** sich mindestens ein Teil des Klettverschlusses nur über einen Teil der Länge des Gurtes (1) erstreckt.

11. Spritzschutz nach einem der vorangehenden Ansprüche, **dadurch gekennzeichnet, daß** das erste Ende (3) des Gurtes (1) eine Grifflasche (8) aufweist.

## Claims

1. A spray shield for a pipe joint, having a flexible strap (1) and a hook and loop fastening, with which a first end (3) of the strap (1) may be fastened to a strap portion, the hook and loop fastening having one part with hooks and one part with loops, **characterised in that** the part with hooks is arranged on the outer side (2) of the strap (1) and the part with loops is arranged on the inner side (4) of the strap (1), the inner side (4) of the strap is dyed a light colour, preferably white, and the outer side (2) of the strap (1) consists of a light-transmitting material.

2. A spray shield according to claim 1, **characterised in that** the outer side (2) of the strap consists of transparent material.

3. A spray shield according to one of the preceding claims, **characterised in that** the loops are arranged on the inner side (4) of the strap, the loop-free surface of the part with loops rests against the hook-free surface of the part with hooks and the hooks are arranged on the outer side (2) of the strap (2).

4. A spray shield according to one of the preceding claims, **characterised in that** the inner side (4) of the strap (1) consists of textile material.

5. A spray shield according to one of the preceding claims, **characterised in that** the outer side (2) of the strap consists of a thin plastics strip.

6. A spray shield according to one of the preceding claims, **characterised in that** the width of the strap (1) is larger than the radially outer surface of the pipe joint.

7. A spray shield according to one of the preceding claims, **characterised in that** a retaining means is arranged at the second end (5) of the strap (1), which retaining means may be connected to part of the pipe joint.

8. A spray shield according to claim 7, **characterised in that** the retaining means comprises at least one hook (7) .

9. A spray shield according to claim 8, **characterised in that** the retaining means comprises two mutually spaced hooks (7), which may be hooked together with the ends of a bolt fitting (12) connecting together the pipe joint.

10. A spray shield according to one of the preceding claims, **characterised in that** at least one part of the hook and loop fastening extends only over part of the length of the strap (1).

11. A spray shield according to one of the preceding claims, **characterised in that** the first end (3) of the strap (1) comprises a grip flap (8).

## Revendications

1. Collier anti-projections pour raccordement de tuyauterie, avec une bande flexible (1) et une fermeture auto-agrippante au moyen de laquelle une première extrémité (3) de la bande (1) peut être fixée à une portion de bande, la fermeture auto-aggripante présentant une partie pourvue de crochets et une partie pourvue de boucles,
**caractérisé en ce que** la partie pourvue de crochets est agencée sur la face externe (2) de la bande (1) tandis que la partie pourvue de boucles se trouve sur la face interne (4) de ladite bande (1), la face interne (4) de la bande présentant un coloris clair, de préférence blanc, et la face externe (2) de la bande (1) étant réalisée dans un matériau translucide.

2. Collier anti-projections selon la revendication 1, **caractérisé en ce que** la face externe (2) de la bande est en matériau transparent.

3. Collier anti-projections selon l'une quelconque des revendications précédentes, **caractérisé en ce que** les boucles sont agencées sur la face interne (4) de la bande, la surface exempte de boucles de la partie à boucles reposant contre la surface exempte de crochets de la partie à crochets, et **en ce que** les crochets sont agencés sur la face externe (2) de la bande.

4. Collier anti-projections selon l'une quelconque des revendications précédentes, **caractérisé en ce que** la face interne (4) de la bande (1) est en matériau textile.

5. Collier anti-projections selon l'une quelconque des revendications précédentes, **caractérisé en ce que** la face externe (2) de la bande consiste en une mince bande de matière plastique.

6. Collier anti-projections selon l'une quelconque des revendications précédentes, **caractérisé en ce que** la largeur de la bande (1) est supérieure à la surface radialement externe du raccordement de tuyauterie.

7. Collier anti-projections selon l'une quelconque des revendications précédentes, **caractérisé en ce qu'**un élément de maintien apte à être relié à une partie du raccordement de tuyauterie est agencé à la deuxième extrémité (5) de la bande (1).

8. Collier anti-projections selon la revendication 7, **caractérisé en ce que** l'élément de maintien comprend au moins un crochet (7).

9. Collier anti-projections selon la revendication 8, **caractérisé en ce que** l'élément de maintien comprend deux crochets (7) agencés à distance l'un de l'autre et aptes à s'accrocher aux extrémités d'une liaison vissée (12) du raccordement de tuyauterie.

10. Collier anti-projections selon l'une quelconque des revendications, **caractérisé en ce qu'**au moins une partie de la fermeture auto-aggripante ne s'étend que sur une partie de la longueur de la bande (1).

11. Collier anti-projections selon l'une quelconque des revendications précédentes, **caractérisé en ce que** la première extrémité (3) de la bande (1) présente une patte de préhension (8).
